# EUROPEAN PATENT SPECIFICATION

(11) **EP 0 992 149 B1**
(45) Date of publication and mention of the grant of the patent: **20.10.2004**
(21) Application number: 98939570.2
(22) Date of filing: 17.06.1998
(51) Int. Cl.: H04M 3/42, H04M 3/54, H04M 3/00, H04Q 7/38

(54) **PORTING USER NUMBER BETWEEN NETWORKS**
PORTIERUNG VON GEBRAUCHERNUMMER ZWISCHEN NETZWERKEN
TRANSFERT D'UN NUMERO D'USAGER ENTRE DES RESEAUX

(30) Priority: 04.07.1997 NL 1006484
(43) Date of publication of application: 12.04.2000
(73) Proprietor: Koninklijke KPN N.V., 9726 AE Groningen (NL)
(72) Inventor: TILANUS, Paulus, Anthonius, Josephus, NL-2253 HN Voorschoten (NL); KEESMAAT, Nicolaas, Wijnand, NL-2533 SK The Hague (NL)
(74) Representative: Wuyts, Koenraad Maria
(86) International application number: PCT/EP1998/004004
(87) International publication number: WO 1999/001975

(56) References cited:
- EP-A- 0 526 764
- EP-A- 0 753 975
- DE-A- 4 317 143
- US-A- 5 625 681

## Description

The invention is related to a method for porting a number of a user of a first network to a second network, the number in the second network first being activated and subsequently being deactivated in the first network.

Such a method is known in the prior art.

In many countries of the world, there is more than one network operator for various forms of telecommunication. In this regard, in the Netherlands and in most of the other European countries, there is more than one network for mobile telephony according to the GSM standard. In a number of European countries there is also more than one network and/or network operator for non-mobile telephony. Since 1 July 1997, this is also the case in the Netherlands. At this time, different sets of telephone numbers are related to different networks in the Netherlands. This means that a user who changes his network receives a new telephone number from the operator of the new network. For this reason, it is at this time still unattractive for users to switch to another network. In order to solve this problem, it will be possible in the near future to port the telephone number or to "take it along" when switching over from a first network - the current network to which the user is connected - to a second network, the network to which the user will be connected. This means that the user will be able to keep on using his own telephone number. The ability to retain the own telephone number is also called number portability. Telecommunication networks in which number portability is supported are known per se, for example from the European patent application EP 0 710 042 A2 and from chapter 4 of "Number Portability - Strategies for market, technical and regulatory success", D. Rogerson, H. Grunfeld, OVUM 1996. ISBN 1 898972362.

In the prior art method for porting a number of a user, it is - practically regarded - impossible to synchronise the management operations, that is, activating the number in the second network and deactivating the number in the first network, since this must be carried out by different operators. If the number in the first network is already deactivated before the number in the second network is activated, there is a period during which the user cannot be coupled to either network or both networks and is therefore unreachable for all destinations. (It is remarked that coupling is called 'logging in' in mobile networks and 'connecting' in non-mobile networks. In this document, we use the terms coupling (and decoupling) to describe both situations). It is therefore more advantageous for the user that the number is first activated in the second network and is only thereafter deactivated in the first network. This means that there is a period of overlap in which the telephone number is active in both networks and that the user can therefore couple a telephone set to each of both networks. During the period of overlap, the routing information in remaining telecommunication networks which are linked with the first and the second network must be modified, so that a call originating from one of these networks to the number of the user is routed to the second network.

However, this method has the consequence that, during the period of overlap, a call to the user is routed to the second network when the routing information in the originating network, that is, the network where this call came from, has already been modified. If the user is still coupled to the first network, this call will therefore be lost. If in the second network a voice mailbox related to the number is activated, such a call can also arrive in said voice mailbox. However, voice mail notification by the second network can then not be delivered to the user coupled to the first network. Even if it is possible to monitor the voice mailbox from the first network, this is a more difficult operation for the user than monitoring the voice mailbox on the network to which he is coupled. A similar situation arises if, during the period of overlap, the routing information in the originating network is not yet modified. In this case, the call is routed to the first network. If the user is already coupled to the second network, this call is lost. It must be concluded, therefore, that the user is not fully reachable during the period of overlap. Even if use is made of a voice mailbox, calls can be lost since messages may possibly arrive in the voice mailbox without the user being notified about the existence of said messages.

### B. SUMMARY OF THE INVENTION

It is an objective of the invention to provide a method for porting a number of a user of a first network to a second network with a period of overlap, in which, without a precise synchronisation of management operations being necessary, the reachability of the user is not interrupted.

To this end, the method according to the invention is characterised in that a further number for the user is activated in the second network, that call forwarding of the number in the first network to the further number in the second network is subsequently activated, and that the user subsequently couples or is coupled to the second network. The call forwarding between the number in the first network and the further number in the second network is activated by using call forwarding services known per se, such as are present in the first network. The call forwarding of the number in the first network to the further number in the second network and the coupling of the user to the second network can be done either by the user himself or, possibly automated, by the network operator, dependent upon the situation. During the period of overlap, if the number is activated in the first network as well as the second network, a call, dependent upon whether or not modified routing information is present in the originating network, can arrive in the first network or in the second network. In the event that the call arrives in the first network, it will be subsequently forwarded by the first network to the further number in the second network. If the call arrives in the second network, it is routed directly to the number of the user. Since the user is coupled to the second network, the call will reach him in both cases.

After the number in the first network is deactivated, the further number in the second network for the user is preferably deactivated. If the number in the first network is deactivated, calls can no longer be forwarded from this number to the further number in the second network. There is then no longer any reason for keeping the further number for the user active. By deactivating the further number for the user, it becomes possible to use the further number for number portability procedures of further users.

A first embodiment of the method according to the invention is characterised in that, in the second network, a voice mailbox is also activated which is connected to the number of the user in the second network as well as to the further number. This has as a consequence that the user, as soon as he is coupled to the second network, has one single voice mailbox. In the event of not answering, the calls which are forwarded to the further number, as well as the calls which are directly routed to the number of the user, can be routed to this single voice mailbox.

A second embodiment of the method according to the invention is characterised in that the second network is a network for mobile communication, and that in the second network the further number as well as the number of the user are coupled to one identification code of a mobile terminal of the user. In mobile networks operating according to the GSM standard, use is made, in the exchange of signalling messages between the network and the mobile terminal, of an identification code of the user of the terminal which is called International Mobile Subscriber Identity (IMSI) number. By coupling this code in the second network to the number of the user as well as the further number, it is possible, in a very simple manner, for one user to have two numbers available simultaneously.

A third embodiment of the method according to the invention is characterised in that the second network is a network for wire-based communication and that in the second network the further number and the number of the user are coupled to one connection. Via this connection, via a telephone cable, one or more pieces of (telecommunication) equipment can be reached at the further number as well as the number of the user. In fixed networks based on the ISDN standards, use can be made of the standard extended ISDN service Multiple Subscriber Number (MSN) for coupling more than one number to a connection. This extended service consists precisely thereof that a user is reachable at one and the same connection by more than one number.

The invention is further related to a network for mobile communication. According to the invention, the network is characterised in that said network comprises means for coupling a number and a further number to one single identification code of a terminal in the event of a number portability procedure. If the network operates according to the GSM standard, this can take place by coupling the identification code of the terminal, called International Mobile Subscriber Identity (IMSI) number, to the number as well as the further number in the Home Location Register (HLR). This coupling can be established, for example, by means of a customer-care system of the network loaded with suitable software.

A first embodiment of the network is characterised in that the network comprises means for coupling one single voice mailbox to the number and the further number. This coupling can also be established by the said customer-care system.

The invention is further related to a network for wire-based communication. According to the invention, the network is characterised in that the network comprises means for coupling a number and a further number to one connection in the event of a number portability procedure. If the network is an ISDN network, use can be made of the standard extended ISDN service Multiple Subscriber Number (MSN) for coupling more than one number to a connection.

### C. REFERENCES

- Number Portability - Strategies for market, technical end regulatory success, D. Rogerson, H. Grunfeld, OVUM 1996. ISBN 1 898972362
- EP 0 710 042

### D. EXEMPLARY EMBODIMENTS

The invention is now further explained on the basis of the exemplary embodiments shown in the figures.
In this regard,
Fig. 1 shows a telecommunication system comprising a first network and a second network for mobile communication,
Fig. 2 shows a flowchart of the method according to the invention for mobile networks,
Fig. 3 shows a telecommunication system comprising a first network and a second network for wire-based communication, and
Fig. 4 shows a flowchart of the method according to the invention for networks for wire-based communication.

In the figures, only those elements which are relevant for understanding the invention are shown.

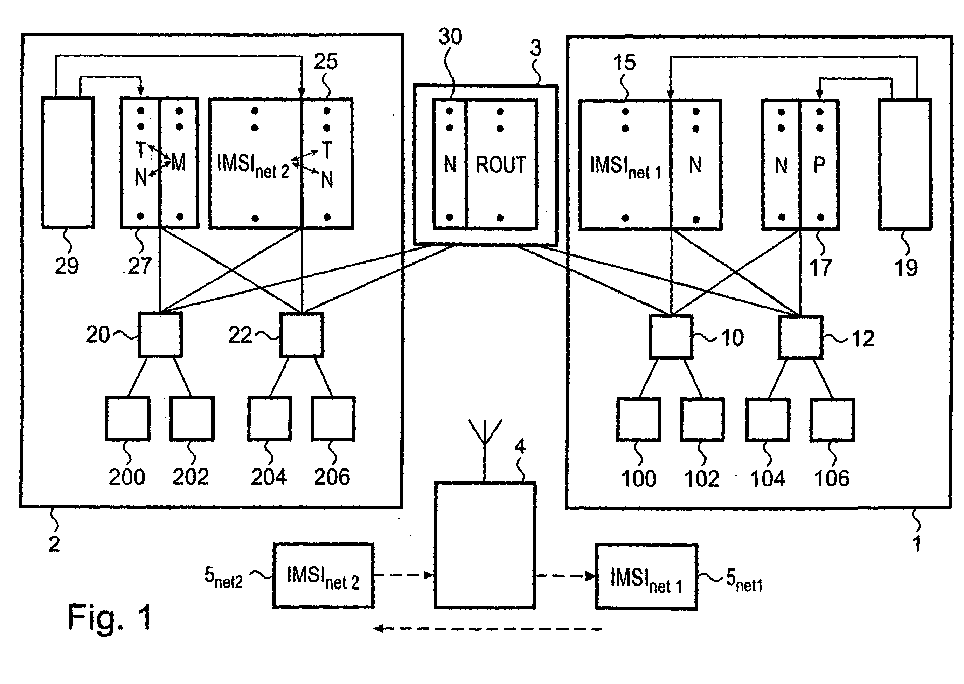

Fig. 1 shows a telecommunication system comprising a first network 1, the current network to which the user of a terminal 4 is connected, and a second network 2 to which the user of the terminal 4 wishes to be connected. Said telecommunication system also comprises other networks 3, which are connected to the first network 1 and the second network 2, of which for reasons of clarity only one is shown. Said first network 1 and the second network 2 are mobile telecommunication networks operating, for example, according to the GSM standard. Said terminal 4 is a terminal suitable for mobile communication. Said first network 1 comprises so-called Mobile Switching Centres (MSC) 10, 12 and base stations 100, 102, 104, 106 coupled thereto. Said first network 1 further contains a so-called Home Location Register (HLR) 15, in which data of the terminals connected to the network are stored, voice mailboxes 17 related to connected terminals, and a so-called customer-care system 19, by which data in the Home Location Register 15, either automated or non-automated, can be modified and couplings between voice mailboxes 17 and telephone numbers can be set. Said second network 2 also comprises so-called Mobile Switching Centres (MSC) 20, 22 and base stations 200, 202, 204, 206 thereto coupled. Said second network 2 further contains a so-called Home Location Register (HLR) 25, in which data of the users connected to the network is stored, voice mailboxes 27 related to connected users, and a customer-care system 29 by which data in the Home Location Register 25, either automated or non-automated, can be modified and couplings between voice mailboxes 27 and telephone numbers can be established. The structure of said first network 1 and said second network 2 is only shown by way of example, and a different structure of these networks, for example with a different number of Mobile Switching Centres or base stations, is certainly possible. The other networks 3 comprise inter alia a memory 30 in which the numbers used by said first network 1 and said second network 2, and routing information coupled thereto, indicating in which network a number is used, are stored.

The user of the terminal 4 is initially connected to said first network 1. To this end, the user has provided said terminal 4 with a so-called Subscriber Identification Module (SIM) 5ₙₑₜ₁ which he received from the operator of said network or from his service administrator upon registering as a subscriber of said first network 1. This Subscriber Identification Module 5ₙₑₜ₁ is a smart card that is to be placed in said terminal 4, which contains inter alia a unique identification code IMSIₙₑₜ₁ related to the user, and is called International Mobile Subscriber Identity (IMSI) number. This number is not known to the user, but only by the network manager of said first network 1. It is used by said terminal 4 and said network 1 for the exchange of signalling messages. The IMSI number IMSIₙₑₜ₁ is stored in said Home Location Register 15, to which is coupled the publicly known (telephone) number N. In said first network 1, a voice mailbox P having the number N is further optionally connected.

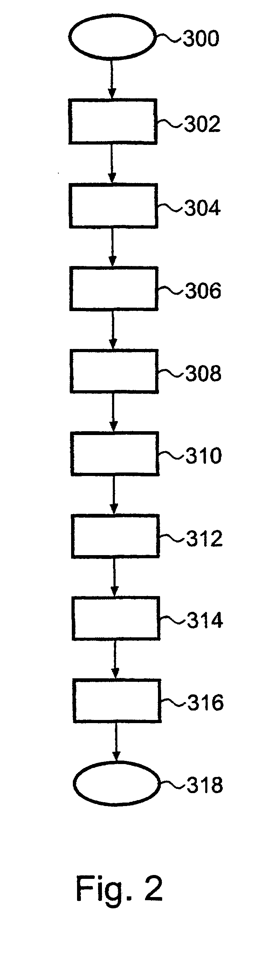

It is now assumed that the user of the terminal 4 wishes to be connected to said second network 2 instead of said first network 1. To this end, the operator of this network 2 provides the user directly or via an intermediary, such as a service provider for example, with another Subscriber Identification Module 5ₙₑₜ₂, comprising another unique identification code IMSIₙₑₜ₂. Subsequently, the steps of the flowchart shown in Fig. 2 are carried out. These steps have the following meaning:

| STEP: | MEANING: |
|---|---|
| 300 | START |
| 302 | ACTIVATE THE FURTHER NUMBER T |
| 304 | ACTIVATE VOICE MAILBOX M IN SECOND NETWORK COUPLED TO T AND N |
| 306 | ACTIVATE CALL FORWARDING IN FIRST NETWORK FROM N TO T |
| 308 | LOGG OFF FROM THE FIRST NETWORK |
| 310 | LOG IN TO THE SECOND NETWORK |
| 312 | ACTIVATE N IN THE SECOND NETWORK |
| 314 | DEACTIVATE N IN FIRST NETWORK |
| 316 | DEACTIVATE THE FURTHER NUMBER T |
| 318 | STOP |

In step 302, in the second network 2, a further number T from the number sequence of said second network 2 is activated for the user. Said further number T is preferably only temporarily related to the user. The activation takes place by coupling the further number T to the identification code IMSIₙₑₜ₂ related to the user in the Home Location Register 25 of said second network 2. In step 304, a voice mailbox M is subsequently activated in said second network 2, which is connected to both the further number T and the number N of the terminal 4. A call forwarding is subsequently activated in step 306 by the user for the user number N in said first network 1 to said further number T in said second network 2. To this end, the user was informed by the network manager or service provider of the second network 2 on the further number T. The call forwarding is a network service located in said first network 1 that is known per se. Subsequently, possibly after the user has monitored the messages in his voice mailbox P in said first network 1 for the last time, the terminal 4 is logged off from the first network 1 (step 308) and logged on into the second network 2 (step 310). The steps 306, 308 and 310 must be carried out directly after each other in order to retain optimal reachability. Logging off from said first network 1 is done by simply turning said terminal 4 off. Logging on into said second network 2 is done by replacing the Subscriber Identification Module 5ₙₑₜ₁ of said first network 1 by the Subscriber Identification Module 5ₙₑₜ₂ of said second network 2 and thereafter following a login procedure known per se. Subsequently, said number N of said terminal 4 in said second network 2 is activated (step 312). This is done by coupling said number N to the user-related identification code IMSIₙₑₜ₂ in the Home Location Register 25 of said second network 2. Subsequently, the number N in the first network 1 is deactivated. Thereafter, the voice mailbox P of the user in said first network 1 is also deactivated. Subsequently, the further number T is deactivated (step 316). This is done by disconnecting the coupling between the further number T and the identification code IMSIₙₑₜ₂ in the Home Location Register 25. In step 316, the reachability of voice mailbox M via the further (temporary) number T is terminated. The further number T can now possibly be used for number portability procedures of other users. Between step 312 and 314, the routing information for the ported number N must be modified in other networks 3 in the telecommunication system which are coupled to said first network 1 and said second network 2.

In the exemplary embodiment described here, the steps 306, 308 and 310 are all carried out by the user of the terminal. It shall be clear, however, that this is not necessary and that said step 306 can also be carried out, possibly automated, by a network manager by means of the customer care systems 19, 29. In that case, the user does not need to be informed of the further number T. The steps 302, 304, 312, 314 and 316 are carried out by the network managers.

Up to and including the moment of activating number N in the second network 2 (step 312), all calls for the number N still arrive in the first network 1. These calls are forwarded by the first network 1 to the further number T in the second network 2. In the event of not answering, they are forwarded to the voice mailbox M.

In the period between step 312 and step 314, the routing information ROUT for the number N in the networks 3, which are connected with the first network 1 and the second network 2, must be adapted to the new situation. In this period, calls can arrive in the first network 1 as well as the second network 2. This is dependent upon whether the routing information ROUT related to telephone number N in the network 3 where the call originated was already modified. If this has not yet been done, the call arrives in the first network 1. If this has been done, the call arrives in the second network 2. If a call for number N arrives in the first network 1, it is forwarded to the further number T in the second network 2. If the call arrives in the second network 2, it is routed directly to said number N.

In the period after step 314, said number N is activated only in the second network 2, and, if the operators of the further networks 3 have modified the routing information ROUT related to said number N, all calls should arrive in said second network 2. The call forwarding between the number N in the first network 1 and the further number T in the second network 2 disappears automatically by deactivating the number N in the first network 1.

The user is therefore continuously reachable. Callers can simply use the permanent telephone number N of the user during the number portability procedure. The further number T, which is only temporarily connected to the user, is made known to the user of the terminal 4 only if he activates the call forwarding of number N in said network 1 to the further number T in the second network 2 himself. If this call forwarding is activated by the network operator, possibly automated, the user need not even be informed of the further number T. The user has no interest in further distributing this temporary number T, since of course he makes use of number portability. Undesired, the further number T could become known by other persons than the user, in networks which support the services CLIP (Calling Line Identification and Presentation) and/or COLP (Connected Line Presentation). In the first case, if the further number T is activated and the user calls a receiving party himself, the temporary number T is shown to the receiving party. This can be prevented by activating the service CLIR (Calling Line Identification Registration), known per se, in the second network 2 during the time in which the temporary number T is coupled to the identification code IMSIₙₑₜ₂. In the second case, the caller who calls said terminal 4 and is switched through to the temporary number T in said second network via the first network, will be shown said temporary number T. This can be prevented by also activating the COLR (Connected Line Restriction) service, known per se, in the first network 1 when activating call forwarding in the first network 1 of the number N to the temporary number T.

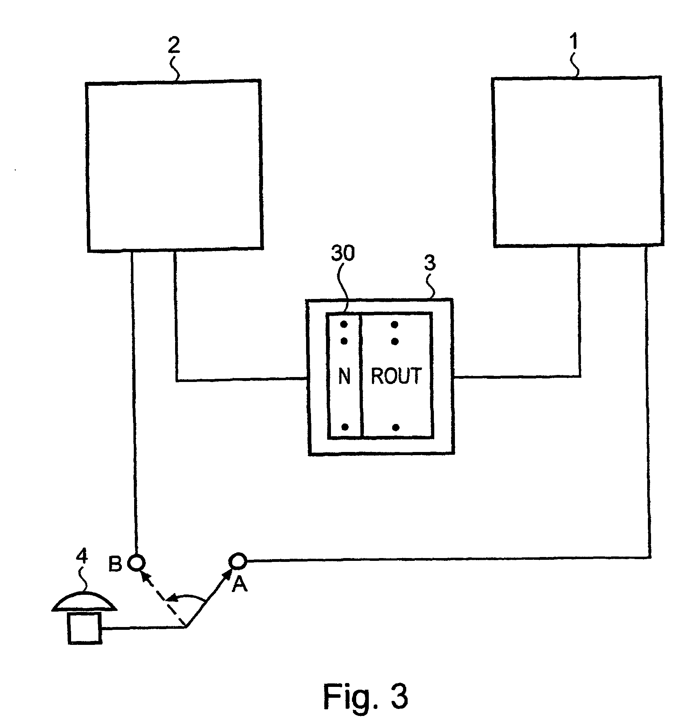

Fig. 3 shows a telecommunication system comprising a first network 1, the current network to which the user of a telecommunication terminal 4 is connected, and a second network 2 to which the user of the terminal 4 will be connected. The telecommunication system also comprises other networks 3, which are coupled to said first network 1 and said second network 2, of which for reasons of clarity only one is shown. The first network 1 is, for example, a fixed telecommunication network on which, via one manner of cabling or another, a connection to the user is present with a connection point A for connecting telecommunication equipment. The second network 2 is, for example, a fixed telecommunication network operating according to the ISDN standard, to which, via a suitable manner of cabling, the user has or will have a connection with a connection point B. In some cases, the two connection points A and B are physically the same. The terminal 4 is a terminal suitable for wire-based communication, for example an ISDN terminal. The other networks 3 comprise inter alia a memory 30, in which the numbers used by the first network 1 and the second network 2 and routing information related thereto, indicating in which network a number is in use, are stored.

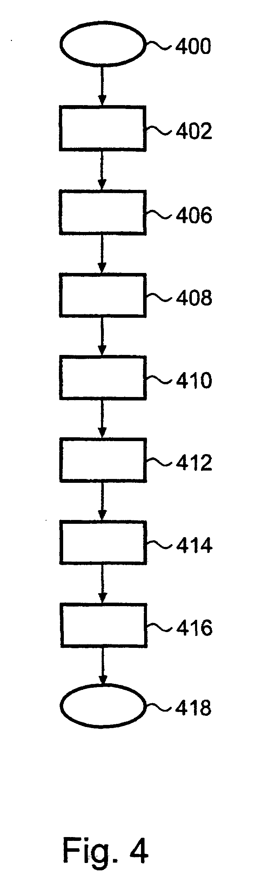

It is now assumed that the user of terminal 4 wishes to be connected to the second network 2 instead of to the first network 1. For this purpose, the operator of network 2 has implemented a cabling suitable for network 2 or uses an already existing cabling to the second connection point B. Subsequently, the steps of the flowchart shown in Fig. 4 are carried out. These steps have the following meaning:

| STEP: | MEANING: |
|---|---|
| 400 | START |
| 402 | ACTIVATE THE FURTHER NUMBER T IN THE SECOND NETWORK |
| 406 | ACTIVATE CALL FORWARDING IN FIRST NETWORK FROM N TO T |
| 408 | DECOUPLING OF TERMINAL OF THE FIRST NETWORK |
| 410 | CONNECTING OF TERMINAL TO THE SECOND NETWORK |
| 412 | ACTIVATE N IN THE SECOND NETWORK |
| 414 | DEACTIVATE N IN FIRST NETWORK |
| 416 | DEACTIVATE THE FURTHER NUMBER T |
| 418 | STOP |

In step 402, in the second network 2, a further number T in the number sequence of the second network 2 is activated for the user. The activation takes place in the second network 2 according to the appropriate commissioning of numbers in said network. Subsequently, in step 406, a call forwarding is activated of the number N of the user in the first network 1 to the further number T in the second network 2. The call forwarding is a network service located within the first network 1 known per se. Subsequently, terminal 4 is decoupled from the first network 1 (step 408) by disconnecting said terminal 4 from the connection point (A) and coupled to the second network 2 (step 410) by connecting said terminal 4 to the second connection point (B). In the event that the two connection points are physically the same, the steps (406), (408) and (410) will then be carried out by the network manager of the (common) connection point. The steps 406, 408 and 410 must be carried out directly after each other in order to maintain optimum reachability. Subsequently, the number N in the second network 2 is activated (step 412). This is done by coupling a second MSN number to the connection in the second network via the extended network service MSN (Multiple Subscriber Number). This can be done by means of a customer care system, not shown in the figure, in the second network 2 . Subsequently, the number N in the first network 1 is deactivated according to the appropriate method for number portability in the first network 1 (step 414). Subsequently, the further number T is deactivated (step 416). This is done by removing the number T from the set of MSN numbers related to the related connection in the second network 2. Said further number T can now possibly be used for number portability procedures of other users. Between step 412 and 414, the routing information for the ported number N in other networks 3 in the telecommunication system which are connected to the first network 1 and the second network 2 must be modified.

In the exemplary embodiment described here, step 406 will be carried out by the user of terminal 4 in the event of there being two physical connection points. It shall be clear, however, that this is not necessary and that this step can also be carried out, possibly automated, by a network manager. In the event that the two connection points A and B are the same, the three steps 406, 408 and 410 shall all have to carried out in rapid succession by the network manager of the connection point. The steps 402, 412, 414 and 416 are carried out by the network managers.

From the moment the user is coupled to the second network 2 (step 410) up to and including the moment of activating the number N in the second network 2 (step 412), all calls for the number N still arrive in the first network 1. These calls are forwarded by the first network 1 to the further number T in the second network 2. In the period between step 412 and step 414, the routing information ROUT for the number N in the networks 3, which are coupled to the first network 1 and the second network 2, must be adapted to the new situation. In this period, calls can arrive in the first network 1 as well as in the second network 2. This is dependent upon whether the routing information ROUT related to telephone number N in the network 3 where the call originated was already modified. If this was not yet done, the call arrives in the first network 1. If this was done, the call arrives in the second network 2. If a call for number N arrives in the first network 1, this is forwarded to the further number T. If the call arrives in the second network 2, it is routed directly to the number N.

In the period after step 414, the number N is activated only in the second network 2, and, if the operators of the further networks 3 have modified the routing information related to the number N, all calls should arrive in the second network 2. The call forwarding between the number N in the first network 1 and the further number T in the second network 2 disappears automatically by deactivating the number N in the first network 1.

The user is therefore continuously reachable. Callers can simply use the permanent telephone number N of the user during the number portability procedure. The further number T, which is only temporarily connected to the user connected is, is only made known to the user of the equipment 4 if he activates the call forwarding of the number N in the first network 1 to the further number T in the second network 2 himself. If said call forwarding is activated, possibly automated, by the network manager, the user does not even need to be informed of the further number T. Undesired, the further number T could become known by other persons than the user in networks which support the services CLIP (Calling Line Identification and Presentation). In this case, if the further number T is activated and the user calls a receiving party himself, the temporary number T is shown to the receiving party. This can be prevented by activating the service CLIR (Calling Line Identification Registration) known per se in the second network 2 during the time in which the temporary number T is coupled to the connection.

It will be clear to those skilled in the art that the invention is not restricted to the exemplary embodiments shown, and that many modifications and extensions are possible without departing from the scope of the invention. In this regard it is certainly possible to apply the method according to the invention to mobile telecommunication networks which operate according to a different standard than GSM and to fixed telecommunication networks which operate according to a different standard than ISDN. It is also possible to apply the method if a user remains with a same network manager but changes his (local) network, such as, for example, in the case of a relocation.

## Claims

1. Method for porting a number (N) of a user of a first network (1) to a second network (2), in which said number (N) is first activated in said second network (2) and is subsequently deactivated in said first network (1), **characterised in that** in the second network (2) a further number (T) for the user is activated, and that subsequently a forwarding of the number (N) in the first network (1) to said further number (T) in said second network (2) is activated, and, that the user subsequently couples or is coupled to the second network.

2. Method according to Claim 1, **characterised in that** in the second network (2) a voice mailbox (M), which is coupled to said number (N) of the user in the second network (2) as well as to the further number (T), is also activated.

3. Method according to Claim 1 or 2, **characterised in that** the second network (2) is a network for mobile communication, and that in the second network (2) the further number (T) and the number (N) of the user are coupled to one identification code (IMSIₙₑₜ₂) of a mobile terminal (4) of the user.

4. Method according to Claim 1 or 2, **characterised in that** the second network (2) is a network for wire-based communication, and that in the second network (2) the further number (T) and the number (N) of the user are coupled to one connection of the user.

5. Network (2) for mobile communication, **characterised in that** said network (2) contains means (29) for coupling a number (N) of a user in another network and a further number (T) of said user in said network (2) to a single identification code (IMSIₙₑₜ₂) of a terminal (4) in case of a number portability procedure.

6. Network (2) according to Claim 5, **characterised in that** said network (2) comprises further means (29) for coupling a single voice mailbox (M) to the number (N) and the further number (T).

7. Network (2) for wire-based communication, **characterised in that** said network (2) comprises means for coupling a number (N) of a user in another network and a further number (T) of said user in said network (2) to one connection in the case of a number portability procedure.

## Patentansprüche

1. Verfahren zum Portieren einer Nummer (N) eines Benutzers eines ersten Netzwerks (1) zu einem zweiten Netzwerk (2), in welchem die Nummer (N) zuerst in dem zweiten Netzwerk (2) aktiviert wird und danach in dem ersten Netzwerk (1) deaktiviert wird, **dadurch gekennzeichnet, dass** in dem zweiten Netzwerk (2) ein weitere Nummer (T) für den Benutzer aktiviert wird, und das danach eine Weiterleitung der Nummer (N) in dem ersten Netzwerk (1) an die weitere Nummer (T) in dem zweiten Netzwerk (2) aktiviert wird , und, dass der Benutzer danach an das zweite Netzwerk ankoppelt oder angekoppelt wird.

2. Verfahren gemäß Anspruch 1, **dadurch gekennzeichnet, dass** in dem zweiten Netzwerk (2) eine Sprach-Mailbox (M), welche an die Nummer (N) des Benutzers in dem zweiten Netzwerk sowie an die weitere Nummer (T) gekoppelt ist, aktiviert wird.

3. Verfahren gemäß Anspruch 1 oder 2, **dadurch gekennzeichnet, dass** das zweite Netzwerk (2) ein Netzwerk zur Mobilkommunikation ist und dass in dem zweiten Netzwerk (2) die weitere Nummer (T) und die Nummer (N) des Benutzers an einen Identifikationscode (IMSIₙₑₜ₂) eines mobilen Endgeräts (4) des Benutzers gekoppelt ist.

4. Verfahren gemäß Anspruch 1 oder 2, **dadurch gekennzeichnet, dass** das zweite Netzwerk (2) ein Netzwerk für drahtgebundene Kommunikation ist und dass in dem zweiten Netzwerk (2) die weitere Nummer (T) und die Nummer (N) des Benutzers an eine Verbindung des Benutzers gekoppelt sind.

5. Netzwerk (2) zur Mobilkommunikation, **dadurch gekennzeichnet, dass** das Netzwerk (2) Mittel (29) zum Koppeln einer Nummer (N) eines Nutzers in einem anderen Netzwerk und einer weiteren Nummer (T) des Nutzers in dem Netzwerk (2) an einen einzigen Identifikationscode (IMSIₙₑₜ₂) eines mobilen Endgeräts (4) umfasst, im Fall eines Nummernportabilitätsverfahrens.

6. Netzwerk (2) gemäß Anspruch 5, **dadurch gekennzeichnet, dass** das Netzwerk (2) ferner Mittel (29) zum Koppeln einer einzigen Voice-Mailbox (M) an die Nummer (N) und die weitere Nummer (T) umfasst.

7. Netzwerk (2) zur drahtgebundenen Kommunikation, **dadurch gekennzeichnet, dass** das Netzwerk (2) Mittel zum Koppeln einer Nummer (N) eines Nutzers in einem anderen Netzwerk und einer weiteren Nummer (T) des Nutzers in dem Netzwerk (2) an eine Verbindung umfasst, im Fall eines Nummernportabilitätsverfahrens.

## Revendications

1. Procédé de transfert d'un numéro (N) d'un utilisateur d'un premier réseau (1) à un second réseau (2), selon lequel ledit numéro (N) est tout d'abord activé dans ledit second réseau (2) et est ensuite désactivé dans ledit premier réseau (1), **caractérisé en ce que** dans le second réseau (2), un autre numéro (T) pour l'utilisateur est activé, et qu'ensuite une avance depuis le numéro N dans le premier réseau (1) audit autre numéro (N) dans ledit second réseau (2) est activée, et qu'ensuite l'utilisateur se raccorde par couplage ou est couplé au second réseau.

2. Procédé selon la revendication 1, **caractérisé en ce que** dans le second réseau (2), une boîte à lettres vocale (M), qui est couplée audit numéro N de l'utilisateur dans le second réseau (2) ainsi qu'à l'autre numéro (T), est également activée.

3. Procédé selon la revendication 1 ou 2, **caractérisé en ce que** le second réseau (2) est un réseau pour une communication mobile et que dans le second réseau (2), l'autre numéro (T) et le numéro (N) de l'utilisateur sont couplés à un code d'identification (IMSIₙₑₜ₂) d'un terminal mobile (4) de l'utilisateur.

4. Procédé d'enregistrement selon la revendication 1 ou 2, **caractérisé en ce que** le second réseau (2) est un réseau pour une communication basée sur un fil, et que dans le second réseau (2), l'autre numéro (T) et le numéro (N) de l'utilisateur sont couplés à une connexion de l'utilisateur.

5. Réseau (2) pour communication mobile, **caractérisé en ce que** ledit réseau (2) contient des moyens (29) pour coupler un numéro (N) d'un utilisateur dans un autre réseau et un autre numéro (T) dudit utilisateur dans ledit réseau (2) à un code d'identification unique (IMSIₙₑₜ₂) d'un terminal (4) dans le cas d'une procédure permettant un transfert de numéro.

6. Réseau (2) selon la revendication 5, **caractérisé en ce que** ledit réseau (2) comprend en outre des moyens (29) pour coupler une seule boîte aux lettres vocale (M) au numéro (N) et à l'autre numéro (T).

7. Réseau (2) pour une communication basée sur un fil, **caractérisé en ce que** ledit réseau (2) comprend des moyens pour coupler un numéro (N) d'un utilisateur dans un autre réseau et un autre numéro (T) dudit utilisateur dans ledit réseau (2) à une connexion dans le cas d'une procédure permettant un transfert de numéro.
